# EUROPEAN PATENT SPECIFICATION

(11) **EP 0 581 432 B1**
(45) Date of publication and mention of the grant of the patent: **04.12.1996**
(21) Application number: 93304635.1
(22) Date of filing: 15.06.1993
(51) Int. Cl.: B62D 1/19

(54) **Impact absorbing type steering column apparatus with a motorized power steering device**
Aufprallabsorbierende Lenksäule mit Servolenkeinrichtung
Colonne de direction absorbant les chocs avec direction assistée par moteur

(30) Priority: 18.06.1992 JP 48207/92 U
(43) Date of publication of application: 02.02.1994
(73) Proprietor: NSK LTD, Shinagawa-ku, Tokyo (JP)
(72) Inventor: Yamaguchi, Mikio, Takasaki-shi, Gunma-ken (JP); Matsumoto, Sakae, Takasaki-shi, Gunma-ken (JP)
(74) Representative: Abbie, Andrew Kenneth

(56) References cited:
- DE-A- 2 814 145
- DE-A- 3 544 350
- DE-C- 3 427 211
- FR-A- 2 391 101

## Description

This invention relates to an impact absorbing type steering column apparatus with a motorized power steering device.

A steering force assisting device called a power steering device has been widely used to mitigate the force (steering force) required to turn a steering wheel during the change of the course. Also, in small automobiles such as light cars, an electric motor is generally utilized as the power source of the power steering device.

On the other hand, during the collision of automobiles, there occurs a so-called secondary collision which is the collision of the driver against the steering wheel, subsequently to a so-called primary collision which is the collision of one automobile with another automobile or the like. With a view to minimize the impact received by the driver during the secondary collision and achieve the protection of the driver's life, it has generally been practised to use a steering column apparatus of the impact absorbing type in which the steering wheel moves forwardly in case of the secondary collision while absorbing the impact.

As steering column apparatuses of the impact absorbing type used for such a purpose, there have heretofore been proposed ones described in various publications such as Japanese Patent Application Laid-Open No. 48-87528, Japanese Patent Application Laid-Open No. 61-57462, Japanese Patent Application Laid-Open No. 1-249571 and Japanese Utility Model Application Laid-Open No. 57-200478, and some of them have been actually used.

Also, DE-C-3427211 cited in this application discloses an impact absorbing type steering column apparatus provided with a steering shaft having a steering wheel fixed to the rear end thereof, a steering column in which said steering shaft is rotatably received, an energy absorbing member made of a plastically deformable material and provided in a hung state between said steering column and a vehicle body to thereby support the fore end portion of said steering column on the vehicle body, a first universal joint having one side thereof coupled to the fore end portion of said steering shaft which protrudes from the fore end of said steering column, a transmission shaft having one end thereof coupled to the other side of said first universal joint, and a second universal joint having one end thereof coupled to the other end of said transmission shaft, said transmission shaft being made retractile and capable of transmitting a rotational force.

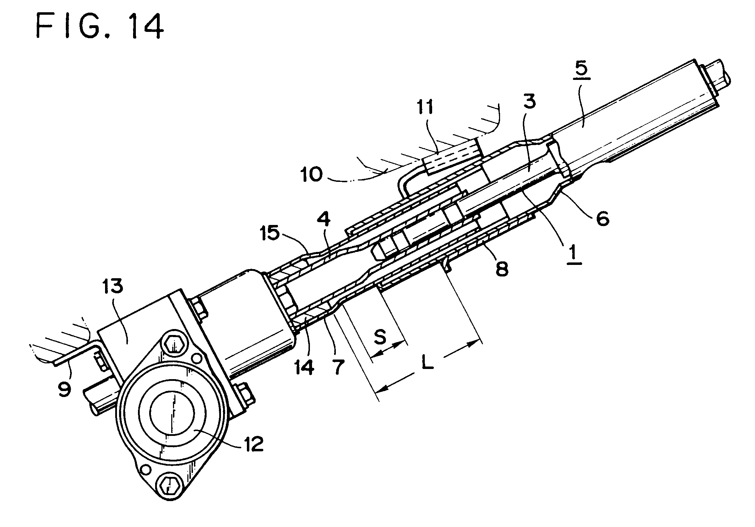

An impact absorbing type steering column apparatus with a motorized power steering device as shown in Figure 14 of the accompanying drawings has been conceived.

In Figure 14, the reference numeral 1 designates a steering shaft having a steering wheel (not shown) fixed to the upper end thereof and rotated in the direction of operation of the steering wheel, and comprising a combination of an inner shaft 3 and an outer shaft 4. This steering shaft 1 has its full length contracted by a collapsible structure incorporated in the coupling portion of the inner shaft 3 and the outer shaft 4 when an axial impact is applied thereto.

The steering shaft 1 is inserted in a cylindrical steering column 5, which comprises a combination of an outer column 6 and an inner column 7 and which, when an axial impact is applied thereto, is also made into a collapsible structure which contracts its full length while absorbing this impact. Such a steering column 5 has its intermediate and lower end portions supported on a portion of a vehicle body 10 such as the underside of a dashboard by an upper support bracket 8 and a lower support bracket 9.

The upper support bracket 8 formed by bending a metallic plate is fixed as by welding to the outer peripheral surface of the intermediate portion of the outer column 6 constituting the steering column 5, and is supported on the vehicle body 10 through a restraining member 11 made of a slippery material.

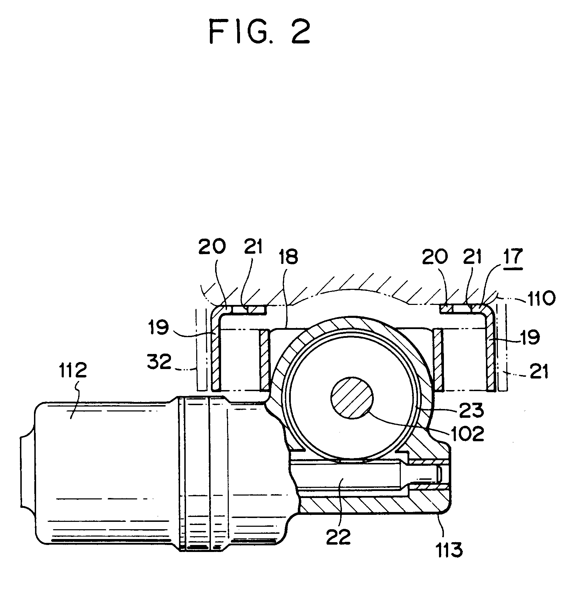

An electric motor 12 which is the power source of the power steering device is supported by a housing 13 connected to the fore end portion of the steering column 5. A worm 22 (Figure 2 of the accompanying drawings) fixed to the output shaft of the electric motor 12 is brought into meshing engagement with a worm wheel 23 (Figure 2) fixed to the outer peripheral surface of the front portion of the steering shaft 1 whereby a force in the direction of rotation can be imparted to the steering shaft 1 during the electrical energization of the electric motor 2.

A connection cylinder portion 14 is formed on the rear end portion of the housing 13, and the fore end portion of the inner column 7 which constitutes the steering column 5 is fitted over the connection cylinder portion 14, whereby the steering column 5 and the housing 13 are connected together. The fore end portion of the inner column 7 is enlarged in its diameter so as to permit it to be fitted over the connection cylinder portion 14. The lower support bracket 9 is provided between the housing 13 and the vehicle body 10.

When an impact is applied to the steering wheel with a secondary collision caused by a collision accident, this impact is immediately transmitted to the steering shaft 1 and steering column 5, whereby these two members 1 and 5 are strongly axially pushed.

When the impact force thus applied in the axial direction of the steering shaft 1 and steering column 5 becomes greater than the sum total of the coupling force of the inner shaft 3 and outer shaft 4, the coupling force of the inner column 7 and outer column 6 and the coupling force of the upper support bracket 8 and restraining member 11, the upper support bracket 8 slips out of the restraining member 11 and the steering shaft 1 and steering column 5 become displaceable.

As a result, the steering shaft 1 and steering column 5 are displaced axially forwardly (leftwardly as viewed in Figure 14) on the basis of the aforementioned impact force. During this displacement, the impact applied from the driver's body through the steering wheel to the steering shaft 1 and steering column 5 is absorbed by the coupled frictional force of the inner shaft 3 and outer shaft 4 constituting the steering shaft 1, the coupled frictional force of the inner column 7 and outer column 6 constituting the steering column 5, and the plastic deformation of an energy absorbing member (not shown) provided between the outer column 6 and the restraining member 11.

In the structure shown in Figure 14, the fore end portion of the inner column 7 which, with the outer column 6, constitutes the steering column 5 is enlarged in its diameter and a stepped portion 15 is formed on that portion of the inner column which is near the fore end thereof and therefore, even when the full length of the steering column 5 is shortened with a collision accident, the full length of the steering column 5 can only be shortened by an amount corresponding to the distance s in Figure 14 until the fore end edge of the outer column 6 strikes against the aforementioned stepped portion 15.

The simple rearward movement of the fore end edge of the outer column 6 would shorten the length of mating of the outer:column 6 and the inner column 7 and cause the flexural rigidity of the steering column 5 to be reduced and therefore, cannot be adopted. Also, if the distance L between the upper support bracket 8 and the connection cylinder portion 14 becomes great, the flexural rigidity of the steering column 5 can be secured and yet the aforementioned distance s can be made long, but since the distance L is limited to some extent depending on the dimensions of the various portions of the vehicle, it is difficult in design to make this distance L long.

Also, a twisting force is created in the mating portion of the inner shaft 3 and outer shaft 4 which together constitute the steering shaft 1 and in the mating portion of the inner column 7 and outer column 6 which together constitute the steering column 5, on the basis of a great flexural load acting during a collision, and therefore the necessary force to contract the steering shaft 1 and steering column 5 becomes great and a collision load applied to the driver's body tends to become great.

An object of the invention is to enable an impact absorbing type steering column apparatus with a motorized power steering device to be provided in which the afore-mentioned problems do not arise.

The impact absorbing steering column apparatus with a motorized power steering device according to the present invention is provided with a steering shaft adapted to have a steering wheel fixed to the rear end thereof, a steering column in which said steering shaft is rotatably received, a housing coupled to the fore end portion of the steering column, an electric motor supported by the housing and effective to impart a force in the direction of rotation to the steering shaft upon electrical energization, an energy absorbing member made of a plastically deformable material and provided in a hung state between the housing and a vehicle body to thereby support the fore end portion of the steering column on the vehicle body, a first universal joint having one side thereof coupled to a fore end portion of the steering shaft which protrudes from the fore end of the housing, a transmission shaft having one end thereof coupled to the other side of the first universal joint, and a second universal joint having one end thereof coupled to the other end of the transmission shaft, at least one of (i) the fore end portion of the steering shaft which protrudes from the housing and (ii) the transmission shaft being retractile.

In embodiments according to the present invention as described hereafter, when an impact force which pushes the steering shaft and steering column forward is applied by a secondary collision resulting from a collision accident, the energy absorbing member is plastically deformed and yet permits the steering shaft and steering column to be displaced forwardly.

In these embodiments, when the steering shaft and steering column are thus displaced forwardly, the full length of at least one of the fore end portion of the steering shaft and the transmission shaft is shortened to thereby absorb the displacement of the second universal joint.

The displaced positions of the steering shaft and steering column during a secondary collision can be determined independently of the presence of the housing and the design for securing a sufficient amount of displacement becomes easy.

In order that the invention may be better understood, some embodiments thereof, which are given by way of example only, will now be described with reference to the accompanying drawings, in which:
Figure 1 is a longitudinal cross-sectional side view showing portions of a first embodiment of the present invention;
Figure 2 is an enlarged cross-sectional view taken along the line A-A of Figure 1;
Figures 3A and 3B are views showing the states of an energy absorbing member before and after deformed as it is seen from above Figure 1;
Figure 4 is a side view partly in longitudinal cross-section showing the general construction of the first embodiment;
Figure 5 is a graph showing the relation between the lapse time during a secondary collision and the magnitude of impact applied to the driver's body and the amount of displacement of the steering wheel;
Figure 6 is a plan view showing portions of a second embodiment of the present invention;
Figure 7 is a plan view showing portions of a third embodiment of the present invention;
Figure 8 is a plan view showing portions of a fourth embodiment of the present invention;
Figure 9 is a plan view showing portions of a fifth embodiment of the present invention;
Figure 10 is a view of the fifth embodiment from below Figure 9;
Figure 11 is a plan view showing portions of a sixth embodiment of the present invention;
Figure 12 is a plan view showing portions of a seventh embodiment of the present invention;
Figure 13 is a plan view showing portions of an eighth embodiment of the present invention; and
Figure 14 is a longitudinal cross-sectional side view showing the portions of a prior-art structure.

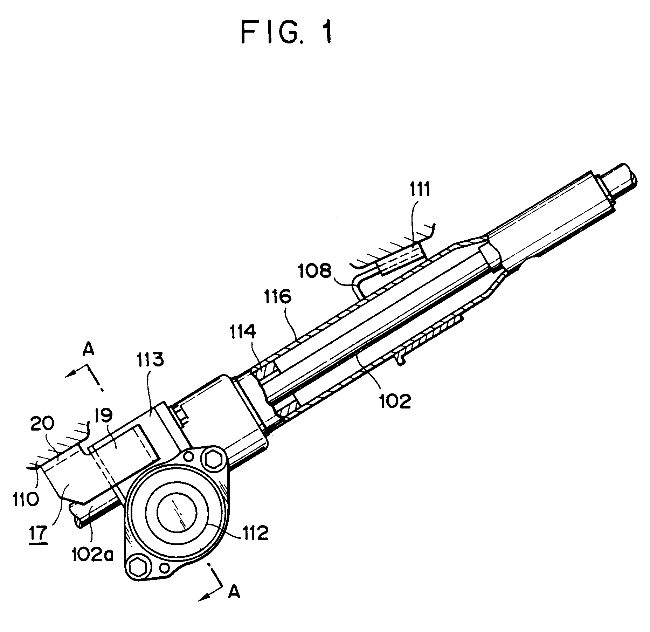

Referring to the drawings wherein like reference numerals designate identical or corresponding parts throughout all the embodiments of the invention, Figures 1 to 4 show a first embodiment of the present invention. A steering shaft 102 constituting an impact absorbing type steering column apparatus with a motorized power steering device, as in the case of the aforedescribed prior-art structure, has a steering wheel fixable to the rear end thereof, but is designed so as not to be contracted by the impact during a collision, unlike the case of the aforedescribed prior-art structure.

The steering shaft 102 is inserted in a cylindrical steering column 116, which supports this steering shaft 102 only for rotation by a deep groove type ball bearing, not shown. The steering column 116 also is designed so as not to be contracted by the impact during a collision.

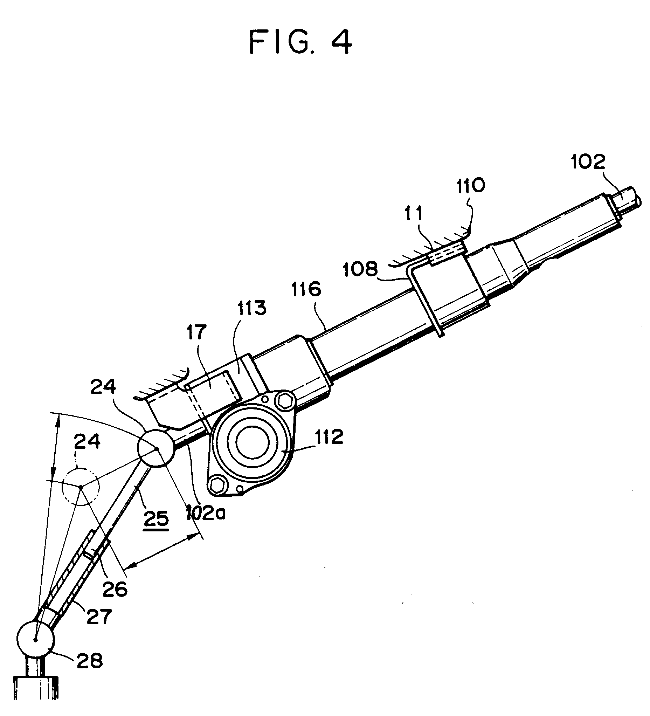

A housing 113 is connected to the fore end (the left lower end as viewed in Figures 1 and 4) of the steering column 116, and an electric motor 112 which is the power source of a power steering device is supported by the housing 113. By the electric motor 112, a force in the direction of rotation can be imparted to the steering shaft 102 through a worm 22 and a worm wheel 23.

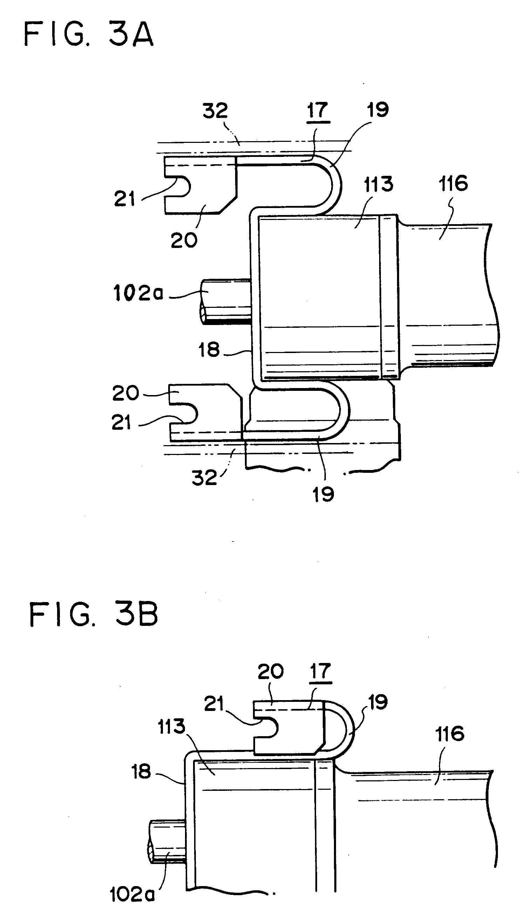

The base 18 of an energy absorbing member 17 is coupled to the front end surface of the housing 113. The energy absorbing member 17 is made of a metallic plate which is a plastically deformable material, and fitting portions 20, 20 are provided on the fore end portions of plastically deformable portions 19, 19 provided at the left and right sides of the base 18. The plastically deformable portions 19, 19 form a curved portion opening axially of the steering shaft by a band-like portion formed on the metallic plate being turned back as shown in Figures 2 and 3A, and is plastically deformable from the state of Figure 3A into the state of Figure 3B when the housing 113 is axially displaced.

On the other hand, the fitting portions 20, 20 provided on the fore end portions of the plastically deformable portions 19, 19 are formed with cut-aways 21, 21 for inserting thereinto screws for fixing the fitting portions 20, 20 to the lower surface of a vehicle body 110. The energy absorbing member 17 having such a configuration is extended and provided between the housing 113 and the vehicle body 110 by coupling and fixing the base 18 to the front end surface of the housing 113, and fixing the fitting portions 20, 20 to the vehicle body 110, and supports the fore end portion of the steering column 116 on the vehicle body 110.

Further, one side of a first universal joint 24 is coupled to the fore end portion 102a of the steering shaft 102 which protrudes from the fore end of the housing 113, and the other side of the first universal joint 24 is coupled to one end of a transmission shaft 25. This transmission shaft 25 is retractile and capable of transmitting a rotational force by the end portion of an inner shaft 26 and the end portion of an outer shaft 27 being engaged therewith as by splines, and one end thereof is coupled to the other side of the first universal joint 24 and the other end thereof is coupled to one end of a second universal joint 28. The other end of the second universal joint 28 is connected to the input shaft (not shown) of a steering gear.

In the case of the impact absorbing type steering column apparatus with a motorized power steering device constructed as described above, when an impact force which pushes the steering shaft 102 and steering column 116 forward is applied by a secondary collision resulting from a collision accident, the plastically deformable portions 19, 19 of the energy absorbing member 17 permit the steering shaft 102 and steering column 116 to be displaced forwardly while being plastically deformed from the state shown in Figure 3A into the state shown in Figure 3B.

When the steering shaft 102 and steering column 116 are thus displaced forwardly, the first universal joint 24 provided on the fore end portion of a steering shaft 102a connected to the steering shaft 102 by a torsion bar (not shown) provided in the housing 113 is displaced forwardly from the solid line position of Figure 4 to the chain line position of Figure 4, whereby the distance between the first universal joint 24 and the second universal joint 28 is shortened. So, the full length of the transmission shaft 25 provided between these joints 24 and 28 is shortened to thereby absorb the variation in the distance between the two joints 24 and 28.

Further, when the second universal joint 28 is moved rearwardly by a primary collision, the full length of the transmission shaft 25 is also shortened. An upper support bracket 108 supporting the intermediate portion of the steering column 116 on the vehicle body 110 is designed to permit only the forward displacement of the steering column 116 and to block the rearward displacement thereof and therefore, it will never happen that during a primary collision, the steering column 116 and steering shaft 102 is pushed up toward the driver.

The amounts of displacement of the steering shaft 102 and steering column 116 during a secondary collision can be determined independently of the presence of the housing 113 for the motorized power steering device, and the design for obtaining sufficient amounts of displacement becomes easy.

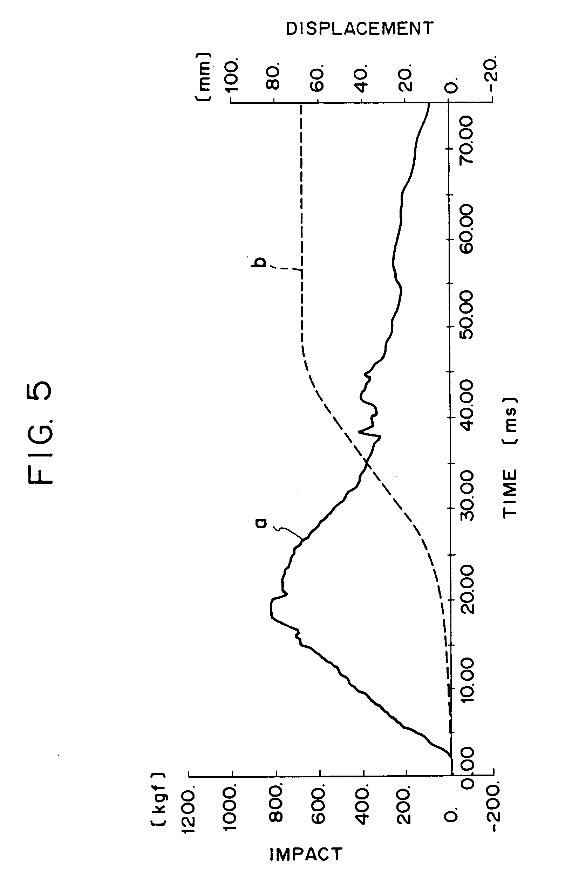

Also, sufficiently effective impact absorption can be accomplished by suitably determining the material of the energy absorbing member 17 and the dimensions of the plastically deformable portions 19, 19. For example, according to the experiment carried out by the inventor with SPHC used as the material of the energy absorbing member 17 and with the thickness of the plastically deformable portions 19, 19 determined to 2.9 mm and the width thereof determined to 30 - 26.5 mm (the width has been made greater from halfway of these portions so that a load required for initial displacement may be small and become great later), the relation between the lapse time during a secondary collision and the magnitude of the impact applied to the driver's body when it collided with the steering wheel and the amount of displacement of the steering column were such as shown in Figure 5. In Figure 5, the solid line a represents the relation between the lapse time and the magnitude of the impact applied to the driver's body, and the broken line b represents the relation between the lapse time and the amount of displacement of the steering column. This Figure 5 was obtained by way of an experiment based on FMVSS No. 203, and it was confirmed that the maximum value of the impact applied to the driver was 828 kgf and satisfied the safety standard (1,134 kgf or less) with a margin.

In order to prevent each plastically deformable portion 19, 19 from being displaced sideways in the event of a secondary collision to thereby cause irregularity of the impact absorbing performance, guide plates 32, 32 can be provided outside the respective plastically deformable portions 19, 19, as indicated by chain lines in Figures 2 and 3.

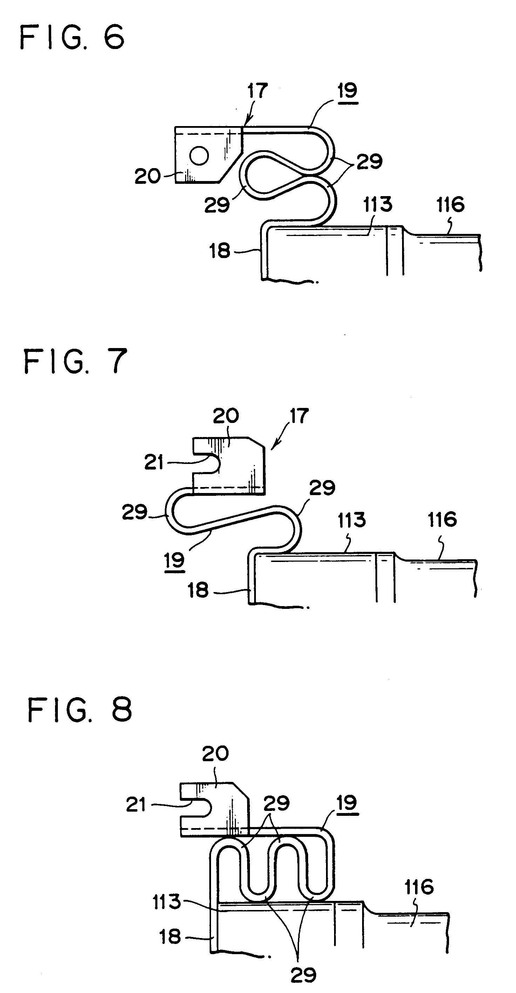

Figures 6 to 8 show alternative forms of the plastically deformable portion 19 of the energy absorbing member 17 as second to fourth embodiments of the present invention. In the second embodiment shown in Figure 6, three curved portions 29 opening in the axial direction of the steering shaft are provided between the base 18 and the fitting portion 20 to thereby increase the amount of stretch of the plastically deformable portion 19 during a secondary collision. In the third embodiment shown in Figure 7, two curved portions 29 are provided. Further, in the fourth embodiment shown in Figure 8, the direction of the curved portions 29 is made different by 90° from that in the first to third embodiments such that they open in a direction perpendicular to the axial direction of the steering shaft, thereby also increasing the amount of stretch during a secondary collision. In the other points than increasing the amount of stretch, these embodiments are similar to the first embodiment.

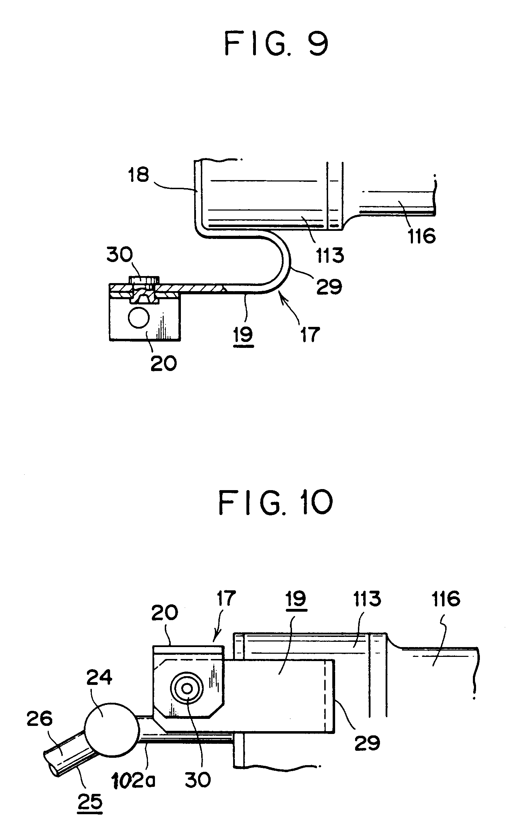

Figures 9 and 10 show a fifth embodiment of the present invention. In this embodiment, a fitting portion 20 is pivotally mounted on the fore end portion of the plastically deformable portion 19 constituting the energy absorbing member 17, by means of a transverse shaft 30. Accordingly, in the case of the present embodiment, with the fitting portion 20 remaining fixed to the vehicle body, the angle of inclination of the steering column 116 having the plastically deformable portion 19 and housing 113 fixed to the fore end portion thereof can be adjusted. That is, the present embodiment can be utilized in a case where there is also provided a so-called tilt type steering device in which the height of the steering wheel is adjusted.

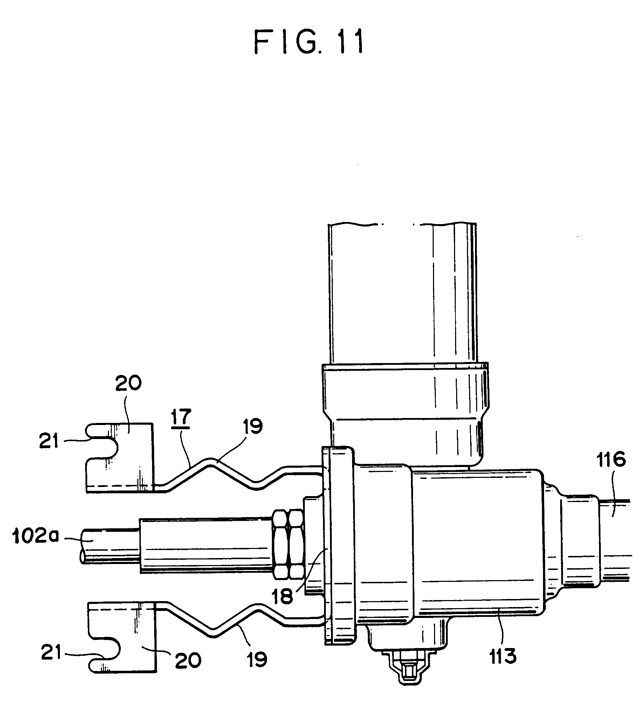

Figure 11 shows a sixth embodiment of the present invention. This embodiment is designed such that the plastically deformable portions 19 alleviate an impact while being contracted. That is, the plastically deformable portions 19 in the present embodiment are formed zigzag relative to the axial direction of the steering column 116 and housing 113, and are designed to shorten their full length while alleviating a great impact force whenever such impact force acts over this axial direction.

Also, the fore end portion of the steering shaft 102a which protrudes from the housing 113 is retractile such that the full length is shortened when an axial force is applied. During a collision, the steering shaft 102a is contracted instead of or with the transmission shaft 25 (Figure 4). When the steering shaft 102a is contracted with the transmission shaft 25, the contraction stroke can be made great. In the other points, the present embodiment are similar to the aforedescribed first to fifth embodiments.

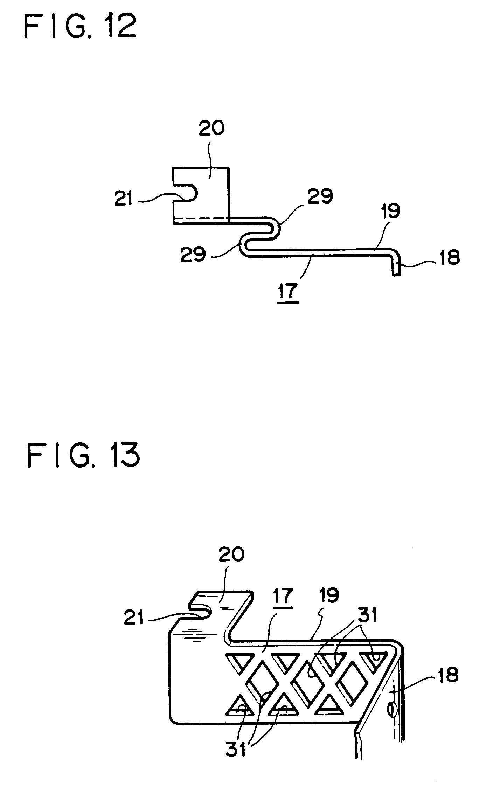

A seventh embodiment shown in Figure 12 or an eighth embodiment shown in Figure 13 can also be adopted as the shape of the plastically deformable portion 19 which alleviates an impact force while being contracted. The embodiment shown in Figure 12 is one in which two curved portions 29, 29 are formed in the plastically deformable portion 19 as in the embodiment shown in Figure 7 and the fitting portion is greatly protruded forwardly relative to the base 18, and the embodiment shown in Figure 13 is one in which the plastically deformable portion 19 is formed with a plurality of through-holes 31, 31, whereby the plastically deformable portion 19 is made compressively deformable.

An impact absorbing type steering column apparatus with a motorized power steering device constructed and acting as described above with reference to Figures 1 to 13 provides an increased amount of stroke of the steering wheel compared with the apparatus of Figure 14 in order to prevent a great impact force from being applied to the driver's body during a secondary collision resulting from a collision accident, and to minimize damage to the driver.

Also, since during a collision, a flexural load does not act on a coupling portion between an inner shaft and an outer shaft which together constitute the steering shaft, and since a twisting load is not created, the load required to displace the steering wheel forwardly during a collision is stabilized. Further, the flexural rigidity of the steering column is improved.

## Claims

1. An impact absorbing type steering column apparatus with a motorized power steering device provided with a steering shaft (102) adapted to have a steering wheel fixed to the rear end thereof, a steering column (116) in which said steering shaft is rotatably received, a housing (113) coupled to the fore end portion of said steering column, an electric motor (112) supported by said housing and effective to impart a force in the direction of rotation to said steering shaft upon electrical energization, an energy absorbing member (17) made of a plastically deformable material and provided in a hung state between said housing (113) and a vehicle body (110) to thereby support the fore end portion of said steering column on the vehicle body, a first universal joint (24) having one side thereof coupled to a fore end portion (102a) of said steering shaft which protrudes from the fore end of said housing (113), a transmission shaft (25) having one end thereof coupled to the other side of said first universal joint (24), and a second universal joint (28) having one end thereof coupled to the other end of said transmission shaft, at least one of (i) the fore end portion (102a) of said steering shaft which protrudes from said housing and (ii) said transmission shaft (25) being retractile.

2. The steering column apparatus of Claim 1 wherein said energy absorbing member (17) has at least one curved portion (29) opening to the axial direction of the steering shaft.

3. The steering column apparatus of Claim 1 wherein said energy absorbing member (17) has at least one curved portion (29) opening in a direction perpendicular to the axial direction of the steering shaft.

## Patentansprüche

1. Aufprallabsobierende Lenksäulenvorrichtung mit einer Motor-Servolenkeinrichtung, die mit einer Lenkwelle (102) versehen ist, an derem hinteren Ende ein Lenkrad befestigt wird, mit einer Lenksäule (116), in der die Lenkwelle drehbar aufgenommen ist, mit einem Gehäuse (113), das mit dem vorderen Endabschnitt der Lenksäule verbunden ist, mit einem Elektromotor (112), der von dem Gehäuse getragen wird und bei elektrischer Erregung eine Kraft in der Drehrichtung auf die Lenkwelle ausübt, mit einem energieabsorbierenden Element (17), das aus einem plastisch verformbaren Material besteht und in aufgehängtem Zustand zwischen dem Gehäuse (113) und einer Fahrzeugkarosserie (110) angeordnet ist und so den vorderen Endabschnitt der Lenksäule an der Fahrzeugkarosserie hält, mit einem ersten Kreuzgelenk (24), dessen eine Seite mit einem vorderen Endabschnitt (102a) der Lenkwelle verbunden ist, der aus dem vorderen Ende des Gehäuses (113) vorsteht, mit einer Übertragungswelle (25), deren eines Ende mit der anderen Seite des ersten Kreuzgelenks (24) verbunden ist, und einem zweiten Kreuzgelenk (28), dessen eines Ende mit dem anderen Ende der Übertragungswelle verbunden ist, wobei wenigstens entweder a) der vordere Endabschnitt (102a) der Lenkwelle, der aus dem Gehäuse hervorsteht, oder b) die Übertragungswelle (25) einschiebbar ist.

2. Lenksäulenvorrichtung nach Anspruch 1, wobei das energieabsorbierende Element (17) wenigstens einen gekrümmten Abschnitt (29) aufweist, der sich zur axialen Richtung der Lenkwelle öffnet.

3. Lenksäulenvorrichtung nach Anspruch 1, wobei das energieabsorbierende Element (17) wenigstens einen gekrümmten Abschnitt (29) aufweist, der sich in einer Richtung senkrecht zur axialen Richtung der Lenkwelle öffnet.

## Revendications

1. Dispositif formant colonne de direction du type absorbant les chocs comportant un dispositif d'assistance de direction pourvu d'un arbre de direction (102) adapté pour recevoir un volant de direction fixé sur son extrémité arrière, d'une colonne de direction (116) dans laquelle ledit arbre de direction est reçu de manière à pouvoir tourner, d'un boitier (113) couplé à la partie d'extrémité avant de ladite colonne de direction, d'un moteur électrique (112) supporté par ledit boitier et destiné à communiquer un effort dans le sens de la rotation audit arbre de direction lors de son alimentation électrique, d'un élément (17) d'absorption d'énergie réalisé en matériau déformable de manière plastique et disposé dans un état en porte à faux entre ledit boitier (113) et une carrosserie (110) de véhicule afin de supporter, par ce moyen, la partie d'extrémité avant de ladite colonne de direction sur la carrosserie du véhicule, d'un premier joint universel (24) dont une des faces est couplée à une partie d'extrémité avant (102a) dudit arbre de direction qui est en saillie par rapport à l'extrémité avant dudit boitier (113), d'un arbre de transmission (25) dont une extrémité est couplée à l'autre face dudit premier joint universel (24), et d'un second joint universel (28) dont une extrémité est couplée à l'autre extrémité dudit arbre de transmission, au moins l'un parmi (i) la partie d'extrémité avant (102a) dudit arbre de direction qui est en saillie par rapport audit boitier et (ii) ledit arbre de transmission (25) pouvant être rétracté.

2. Dispositif formant colonne de direction selon la revendication 1, dans lequel ledit élément d'absorption d'énergie (17) dispose d'au moins une partie courbe (29) ouverte suivant le sens axial de l'arbre de direction.

3. Dispositif formant colonne de direction selon la revendication 1, dans lequel ledit élément d'absorption d'énergie (17) dispose au moins d'une partie courbe (29) ouverte suivant un sens perpendiculaire au sens axial de l'arbre de direction.
